Europäisches Patentamt

European Patent Office

Office européen des brevets

(11) Publication number: **0 406 554 A2**

# (12) EUROPEAN PATENT APPLICATION

(21) Application number: 90109727.9

(22) Date of filing: 22.05.90

(51) Int. Cl.⁵: **C09K 11/78**, H01J 29/32

(30) Priority: 06.07.89 KR 899622
13.07.89 KR 899985
14.07.89 KR 8910045
07.09.89 KR 8912972

(43) Date of publication of application:
**09.01.91 Bulletin 91/02**

(84) Designated Contracting States:
**DE GB NL**

(71) Applicant: SAMSUNG ELECTRON DEVICES
CO., LTD.
575, Shin-ri, Taean-eub
Hwaseong-gun, Kyunggi-do(KR)

(72) Inventor: **Kim, Min-ho**
139-202 Shinmaetan Apt., Kwonsun-ku
Suwon, Kyunggi-do, 990 Maetan-dong(KR)
Inventor: **Lim, Ik-cheol**
139-202 Shinmaetan Apt., Kwonsun-ku
Suwon, Kyunggi-do, 990 Maetan-dong(KR)

(74) Representative: WILHELMS, KILIAN &
PARTNER Patentanwältelte
Eduard-Schmid-Strasse 2
D-8000 München 90(DE)

(54) **Phosphors and color cathode ray tubes using same.**

(57) Phosphors for use in a color cathode ray tube and cathode ray tubes using the same are disclosed. Phosphors according to the present invention comprise aluminum borate as the host material and may be represented by the following general formulas:

$(Al_{1-x-y}, Ln_x, Tb_y):nBO_3$

wherein Ln is at least one element selected from the group consisting of Sc, Lu, La and Y, the phosphor being a green emitting phosphor;

$(Al_{1-a-b}, Ln_a, Eu_b):mBO_3$

wherein Ln is at least one element selected from the group consisting of Sc, Lu, La and Y, the phosphor being a red emitting phosphor;

$(Al_{1-p-q-r}, Eu_p, Tb_q, M_r):sBO_3$

wherein M is at least one element selected from the group consisting of In, Ga and Sm, the phosphor being an orange emitting phosphor. Phosphors prepared according to the present invention are excellent in the color purity, the emission luminance, the deterioration characteristics and the chemical stability.

EP 0 406 554 A2

## PHOSPHORS AND COLOR CATHODE RAY TUBES USING SAME

Priorities: 06 July 1989 - Rep. of Korea - No. 89-9622 13 July 1989 - Rep. of Korea - No. 89-9985 14 July 1989 - Rep. of Korea - No. 89-10045 07 September 1989 - Rep. of Korea - No. 89-12972

Field of the Invention

The present invention relates to a phosphor for use in a color cathode ray tube, and a cathode ray tube using the phosphor. More particularly, the present invention relates to phosphors emitting red, green and orange color respectively which comprise aluminium borate as the host material, and to color cathode ray tubes manufactured by using the phosphor.

Background of the Invention

Recently, with an increase of the demand for the computer which displays a concise letter and a symbol and the office automation equipments, a number of cathode ray tubes have been widely used in a terminal monitor. Phosphors used in these color cathode ray tubes should have a high contrast and an excellent emission luminance characteristics.

As a phosphor material having the emission characteristics as described above, there is a cadmium containing phosphor as disclosed in British Patent No. 495,706. This phosphor can be represented by the chemical composition of $Cd_5 Cl(PO_4)_3$ :Mn. In the above phosphor, the flicker phenomenon may sufficiently be alleviated because the 10% afterglow time of the phosphor is longer.

However, cadmium contained in the above-mentioned phosphor is harmful to human bodies and causes air pollution, and therefore, it involves so vital a defect that its use may sometimes be prohibited.

In place of the aforesaid phosphor, as a phosphor emitting orange to yellow fluorescences with high color purity, it is possible to obtain a mixed phosphor wherein two or more kinds of emitting materials; for instance, europium-activated indium borate ($InBO_3$ :Eu) and terbium-activated indium borate ($InBO_3$ :Tb) described in U.S. Patent No. 3,394,084 may be candidates for these materials. However, in case where this phosphor is used in a cathode ray tube under high current density, it is difficult to obtain a luminescent screen which is uniform in distribution of emission color over the whole screen of the cathode ray tube because the deterioration and the luminance characteristics thereof are deteriorated.

As a substitute of such a mixed phosphor, there may be used a Eu and Tb coactivation type phosphor described in U.S. Patent No. 4,604,549 and Japanese Patent laid-open No. 85-38490. In this type of phosphor, activators added to respective phosphor particles were expected to maintain sufficiently the emission characteristics of the activators to give an emission of high efficiency.

This mixed phosphor has an excellent characteristics in that the afterglow time is in a wide range of time. However, these expectation failed to be realized, because the emission characteristics of the phosphor is relatively inferior to different phosphors and also it is expensive in cost.

Summary of the Invention

An object of the present invention is to provide phosphors which have an excellent emission luminance under electron beam excitation, deterioration characteristics and chemical stability and are not expensive in cost. Another object of the present invention is to provide a color cathode ray tube manufactured by employing said phosphors.

To achieve the above objects, the phosphors according to the present invention comprise aluminum borate as the host material and the activator added thereto.

One of the phosphors according to the present invention which emits green color comprises essentially a terbium activated aluminum borate and is represented by the formula:

$(Al_{1-x-y}, Ln_x, Tb_y); nBO_3$

wherein Ln is at least one element selected from the group consisting of scandium(Sc), luthetium(Lu), lanthanum(La) and yttrium(Y), and x,y and n are such that $0 \leq x \leq 0.4$, $0 < y \leq 0.1$ and $0.5 \leq n \leq 2.0$, and preferably $0.01 \leq x \leq 0.3$, $0.0001 \leq y \leq 0.09$ and $1 \leq n \leq 1.5$.

Also, the red emitting phosphor according to the present invention comprises essentially an europium activated aluminum borate and is represented by the formula:

$(Al_1 {}_{-a-b}, Ln_a, Eu_b): mBO_3$

wherein Ln is at least one element selected from the group consisting of scandium (Sc), luthetium (Lu), lanthanum (La) and yttrium (Y), and a, b and m are such that $0 < a \leqq 0.4$, $0 < b \leqq 0.1$ and $0.5 \leqq m \leqq 1.7$, and preferably $0.01 \leqq a \leqq 0.3$, $0.0001 \leqq b \leqq 0.05$ and $1 \leqq m \leqq 1.5$.

And also, the orange emitting phosphor according to the present invention comprises essentially an europium and terbium activated aluminum borate and is represented by the formula;

$(Al_1 {}_{-p-q-r}, Eu_p, Tb_q, M_r): sBO_3$

wherein M is at least one element selected from the group consisting of indium(In), gallium(Ga) and smarium(Sm), and p,q,r and s are such that $0.0001 \leqq P \leqq 0.1$, $0.0001 \leqq q,r \leqq 0.08$ and $0.5 \leqq s \leqq 1.7$.

And the color cathode ray tube according to the present invention includes a phosphor layer coated in the inner surface of the panel comprises one or more of the above described phosphors.

The cathode ray tube according to the present invention can be applied for office automation equipments.

Further, the phosphor layer of the cathode ray tube according to the present invention can be prepared by the ordinary method.

Now the present invention also provides a process for preparing phosphors according to the present invention.

The phosphors may be prepared by the following materials.

Aluminum source includes aluminum compound such as aluminum oxide $Al_2 O_3$ or aluminum hydroxide $Al(OH)_3$; boron source includes boron compound such as boric oxide $B_2 O_3$ or boric acid $H_3 BO_3$ ; europium source includes europium compound such as europium oxide or europium fluoride; terbium source includes terbium compound such as terbium oxide or terbium chloride; indium source includes indium compound such as indium oxide; gallium source includes gallium compound such as gallium oxide; samarium source includes samarium oxide; scandium source includes scandium compound such as scandium oxide; lutetium source includes lutetium compound such as lutetium oxide; lanthanum source includes lanthanum compound such as lanthanum oxide; yttrium source includes yttrium compound such as yttrium oxide.

The flux agent used in the present invention includes barium fluoride, lithium carbonate, lithium borate, sodium carbonate, potassium phosphate, alkali metal halides and alkaline earth metal halides; these are sufficiently mixed by using the mixing machine such as a ball mill or a milling rod.

The mixture was placed in a refractory crucible made of quartz or alumina and at first baked at 400 to 800°C in atmosphere for 30 minutes to 6 hours, and the baking product thus obtained was homogeneously pulverized by a mill and then was baked again at 900 to 1700°C for 1 to 8 hours.

Here, unreacted boron compound and other flux agents remain on the surface of the baking product thus obtained.

In order to remove said materials remained on said surface, the baking product was washed with 10% dilute hydrochloric acid solution, leached with water, dried and graded, and thus the intended phosphor was obtained.

In a process of the aforesaid phosphor, the amount of said boron is 0.5 to 2 moles, preferably 1 to 1.5 mole, and if it is 1 mole or less, the unreacted aluminum oxide remains on the surface of the phosphor, resulting in lowering of luminance and decrease in yield of the phosphor.

Also, even after the completion of the second baking process, the unreacted boron compound and other flux agents remain on the surface of the phosphor and, therefore, the surface temperature of the phosphor is enhanced, the electron beam is excited, the phosphor is deteriorated and the emission luminance thereof is lowered.

Brief Description of the Drawings

The present invention will now be further described with reference to the accompanying drawings in which:

Figure 1 represents the emission spectra when a phosphor according to the present invention is excited by an ultraviolet having the wavelenth of 254nm;

Figure 2 represents a graph showing the x value as against the y value of the color point in CIE of a phosphor according to the present invention.

Description of the preferred embodiments

Now the present invention will be further described in detail below with the help of the following examples.

Example 1

The below materials were prepared.

| Aluminum oxide | $Al_2O_3$ | 1 mole |
|---|---|---|
| Terbium oxide | $Tb_4O_7$ | 0.03 mole |
| Boric acid | $H_3BO_3$ | 1.2 mole |
| Lithium carbonate | $Li_2CO_3$ | 0.002 mole |
| Lithium phosphate | $K_2HPO_4$ | 0.001 mole |

The above materials were sufficiently mixed together by means of a ball mill.

The mixture thus obtained was placed in a crucible made of alumina and baked at 500°C in atmosphere for 2 hours.

And then the baked product was homogeneously pulverized by a mill and baked at 1500°C in atmosphere for 4 hours again.

Said baked product was washed with a 10% dilute hydrochloric acid solution, leached with water, dried and graded, and thus the intended green emitting phosphor was obtained.

Example 2

The below materials was prepared.

| Aluminum oxide | $Al_2O_3$ | 1 mole |
|---|---|---|
| Terbium oxide | $Tb_4O_7$ | 0.02 mole |
| Boric oxide | $B_2O_3$ | 1.2 mole |
| Lithium carbonate | $Li_2CO_3$ | 0.001 mole |
| Lithium phosphate | $K_2HPO_4$ | 0.002 mole |

The intended green emitting phosphor was prepared according to the same procedure as described above in Example 1 by mixing said given materials.

Example 3

The below materials were prepared.

| Aluminum oxide | $Al_2O_3$ | 0.87 mole |
|---|---|---|
| Yttrium oxide | $Y_2O_3$ | 0.1 mole |
| Boric acid | $H_3O_3$ | 1.2 mole |
| Barium fluoride | $BaF$ | 0.002 mole |
| Lithium carbonate | $Li_2CO_3$ | 0.002 mole |
| Terbium oxide | $Tb_4O_7$ | 0.03 mole |

The above materials were sufficiently mixed together by means of a ball mill. The mixture thus obtained was placed in a crucible made of alumina and baked at 450°C in atmosphere for 1 hour.

After the completion of the baking process, the crucible contained the baked product was taken out of the electric kiln and was sufficiently pulverized by a ball mill, and again the crucible was put into an electric kiln to bake it at 1500°C for 4 hours.

The intended green emitting phosphor represented by the formula $(Al_{0.87}, Y_{0.1}, Tb_{0.03})BO_3$ was obtained.

Example 4

The procedure was carried out in the same manner as that of Example 3, except that an amount of aluminum oxide $Al_2O_3$ is 0.89 mole and an amount of scandium oxide is 0.08 mole. The intended green emitting phosphor represented by the formula $(Al_{0.89}, Sc_{0.08}, Tb_{0.03})BO_3$ was obtained.

Example 5

The below materials were prepared.

| Aluminum oxide | $Al_2O_3$ | 1 mole |
|---|---|---|
| Yttrium oxide | $Y_2O_3$ | 0.2 mole |
| Europium oxide | $Eu_2O_3$ | 0.003 mole |
| Boric acid | $H_3BO_3$ | 1.2 mole |
| Lithium borate | $Li_2B_4O_7$ | 0.001 mole |
| Barium fluoride | $BaF$ | 0.001 mole |

$Al_2O_3$, $Y_2O_3$ and $Eu_2O_3$ among the above materials were sufficiently mixed with 100 ml ethanol, and then filtered, dried. Next, Boric acid and other flux agents were sufficiently mixed by a ball mill. The mixture thus obtained was placed in a crucible made of alumina and baked at 450°C in atmosphere for 2 hours. And the baked product thus obtained was sufficiently pulverized and baked at 1400°C for 3 hours.

The intended red emitting phosphor showed a red emitting color when excited by an electron beam or an ultraviolet rays having the wavelength of 254nm.

Example 6

The procedure was carried out in the same manner as that of Example 5, except that scandium oxide in place of yttrium oxide is used and an amount thereof is 0.1 mole. The intended red emitting phosphor was obtained.

Example 7

The below materials were prepared.

| Aluminum oxide | $Al_2O_3$ | 1 mole |
|---|---|---|
| Europium oxide | $Eu_2O_3$ | 0.003 mole |
| Terbium oxide | $Tb_4O_7$ | 0.002 mole |
| Boric acid | $H_3BO_3$ | 1.2 mole |
| Indium oxide | $In_2O_3$ | 0.001 mole |
| Barium fluoride | $BaF$ | 0.01 mole |
| Lithium phosphate | $LiHPO_4$ | 0.01 mole |

The above materials were sufficiently mixed together by means of a ball mill. The mixture thus obtained was placed in a crucible made of alumina and baked at 450°C in atmosphere for 2 hours. And then the baked product thus obtained was sufficiently pulverized and baked at 1500°C for 3 hours.

The intended orange phosphor showed an orange emission color having a high luminance when excited by an electron beam or an ultraviolet having the wavelength of 254nm.

Example 8

The procedure was carried out in the same manner as that of Example 7, except that gallium oxide in place of indium oxide is used and an amount thereof is 0.001 mole. The intended orange emitting phosphor was obtained.

Thus, the color cathode ray tube according to the present invention can also be manufactured by coating the phosphor layer in the inner surface of the panel of the cathode ray tube according to the ordinary method.

The characteristics for phosphors and the cathode ray tube according to the present invention was shown in Table 1.

Table 1

| Examples ($Y_3Al_5O_{12}$:Tb) | chromaticity point | | emission luminace (%) | remarks |
|---|---|---|---|---|
| | X | Y | | |
| conventional phosphor | 0.362 | 0.548 | 100 | |
| 1 | 0.331 | 0.605 | 126 | |
| 2 | 0.323 | 0.589 | 124 | |
| 3 | 0.330 | 0.59 | 128.7 | |
| 4 | 0.345 | 0.58 | 125 | |
| 5 | 0.603 | 0.382 | 120 | |
| 6 | 0.603 | 0.383 | 121 | |
| 7 | 0.55 | 0.44 | 120 | 10% afterglow time is about 15-25msec |
| 8 | 0.55 | 0.44 | 124 | 10% afterglow time is about 15-25msec |

| Examples ($Y_3Al_5O_{12}$:Tb) | emission color |
|---|---|
| conventional phosphor | green color |
| 1 | green color |
| 2 | green color |
| 3 | green color |
| 4 | green color |
| 5 | red color |
| 6 | red color |
| 7 | yellow-orange color |
| 8 | yellow-orange color |

As can be seen in Table 1, the phosphor emitting a green color according to the present invention showed a satisfied color hue in a wide range of a green color by varing the amounts of the activator Tb and at least one element selected from the group consisting of Sc, Lu, La and Y, and the phosphor emitting a red color according to the present invention showed a satisfied color hue in a wide range of a red color by varing the amounts of the activator Eu and at least one element selected from the group consisting of Sc, Lu, La and Y.

Also, the phosphor emitting an orange color according to the present invention had an excellent deterioration characteristics, chemical stability and the 10% afterglow lowering of the emission luminance and showed a satisfied color hue in a wide range of an yellow to orange color by varing the amounts of the Eu and Tb.

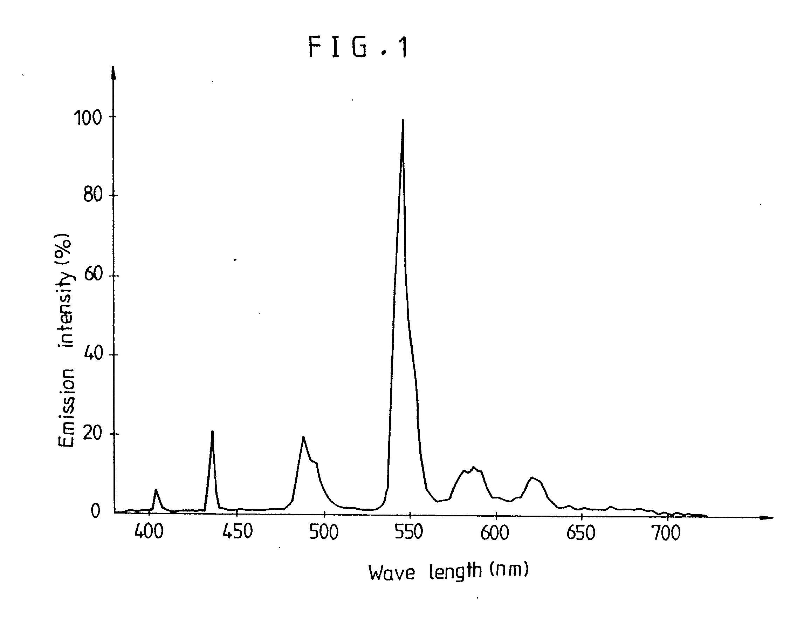

As can be seen in Figure 1, the green emitting phosphor according to the present invention has the major peak strengths emitting a green color in the vicinity of 545nm.

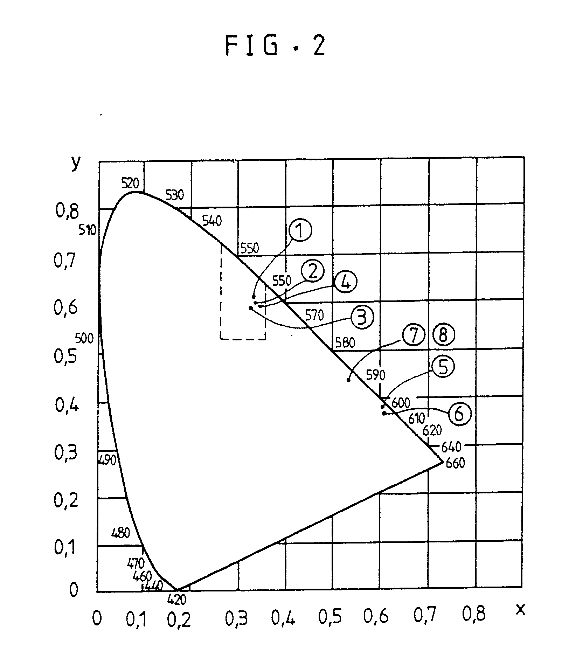

Figure 2 shows the x value as well as the Y value of the color point in CIE of phosphors according to the present invention.

The X value and Y value of the color point in CIE of a green phosphor are 0.25 to 0.38 and 0.52 to 0.62, respectively. In a red phosphor, the X value is 0.603 and Y value is 0.382 to 0.383. In an orange phosphor, the X value is 0.55 and the Y value is 0.44.

As described above, the phosphors and the cathode ray tube according to the present invention are excellent in the color purity, the emission luminance, the deterioration characteristics and the chemical stability, and have the current luminance saturation characteristics superior to $Y_3 Al_5 O_{12}$ :Tb phosphor.

Also, the phosphors according to the present invention are inexpensive in a material cost and are replaceable of $InBO_3$ :Eu, Tb phosphor and are used in the cathode ray tube for display.

## Claims

1. A phosphor comprising aluminum borate as the host material and comprising the activator added thereto.

2. The phosphor as claimed in claim 1, wherein said phosphor comprises essentially an terbium activated aluminum borate and is represented by the formula:

$(Al_{1-x-y}, Ln_x, Tb_y)$ :nBO$_3$

wherein Ln is at least one element selected from the group consisting of scandium(Sc), luthetium(Lu), lanthanum(La) and yttrium(Y), and x, y and n are such that $0 \leq x \leq 0.4$, $0 < y \leq 0.1$ and $0.5 \leq n \leq 2.0$, and emits a green color.

3. The phosphor as claimed in claim 2, wherein x, y and n are within the range of $0.01 \leq x \leq 0.3$, $0.0001 \leq y \leq 0.09$ and $1 \leq n \leq 1.5$, respectively.

4. The phosphor as claimed in claim 1, wherein said phosphor comprises essentially an europium activated aluminum borate and is represented by the formula:

$(Al_{1-a-b}, Ln_a, Eu_b)$:mBO$_3$

wherein Ln is at least one element selected from the group consisting of scandium (Sc), luthetium(Lu), lanthanium(La) and yttrium(Y), and a, b and m are such that $0 a \leq 0.4$, $0 < b \leq 0.1$ and $0.5 \leq m \leq 1.7$, and emits a red color.

5. The phosphor as claimed in claim 4, wherein a, b and m are within the range of $0.01 \leq a \leq 0.3$, $0.001 \leq b \leq 0.05$ and $1 \leq m \leq 1.5$, respectively.

6. The phosphor as claimed in claim 1, wherein said phosphor comprises essentially an europium and terbium activated aluminum borate and is represented by the formula:

$(Al_{1-p-q-r}, Eu_p, Tb_q, M_r)$ : sBO$_3$

wherein M is at least one element selected from the group consisting of indium(In), gallium(Ga) and smarium(Sm), and p,q,r and s are such that $0.0001 \leq p \leq 0.1$, $0.0001 \leq q,r \leq 0.08$ and $0.5 \leq s \leq 1.7$, and emits an orange color.

7. The phosphor as cliamed in claim 6, wherein p,q,r and s are within the range of $0.001 \leq p,q \leq 0.05$, $0.001 \leq r \leq 0.03$ and $1.0 \leq s \leq 1.5$, respeectively.

8. A color cathode ray tube including a phosphor layer coated in the inner surface of the panel comprises one or more of the phosphors as claimed in any one of claims 1 to 7.

# FIG.1

# FIG·2